# EUROPÄISCHE PATENTSCHRIFT

(11) **EP 1 494 019 B1**
(45) Veröffentlichungstag und Bekanntmachung des Hinweises auf die Patenterteilung: **20.02.2013**
(21) Anmeldenummer: 04013632.7
(22) Anmeldetag: 09.06.2004
(51) Int. Cl.: G01N 25/04, A01N 1/02, C12N 5/07, G01N 1/42

(54) **Untersuchungsverfahren und Untersuchungsanordnung für biologische Materialien**
Method and arrangement for investigation of biological materials
Procédé et dispositif d'investigation de matériaux biologiques

(30) Priorität: 11.06.2003 DE 10326280
(43) Veröffentlichungstag der Anmeldung: 05.01.2005
(73) Patentinhaber: Fraunhofer-Gesellschaft zur Förderung der angewandten Forschung e.V., 80686 München (DE)
(72) Erfinder: Hagedorn, Rolf, 13057 Berlin (DE); Schelenz, Sebastian, 1060 Brüssel (BE)
(74) Vertreter: Beier, Ralph

(56) Entgegenhaltungen:
- MEDRANO A ET AL: "Importance of cooling rate and animal variability for boar sperm cryopreservation: Insights from the cryomicroscope" REPRODUCTION (CAMBRIDGE), Bd. 123, Nr. 2, Februar 2002 (2002-02), Seiten 315-322, XP009038395 ISSN: 1470-1626
- KNOX J M ET AL: "Volumetric changes in cells during freezing and thawing." JOURNAL OF BIOMECHANICAL ENGINEERING. MAY 1980, Bd. 102, Nr. 2, Mai 1980 (1980-05), Seiten 91-97, XP009038400 ISSN: 0148-0731
- DEVIREDDY RAMACHANDRA V ET AL: "Measurement of water transport during freezing in cell suspensions using a differential scanning calorimeter" CRYOBIOLOGY, Bd. 36, Nr. 2, März 1998 (1998-03), Seiten 124-155, XP002304130 ISSN: 0011-2240

## Beschreibung

Die Erfindung betrifft ein Untersuchungsverfahren für Kryoproben gemäß dem Oberbegriff des Anspruchs 1 sowie eine entsprechende Untersuchungsanordnung gemäß Anspruch 8.

Bei der sogenannten Kryokonservierung werden biologische Zellkulturen oder einzelne Zellen (z.B. Stammzellen oder Eizellen) eingefroren, um eine spätere Verwendung oder Untersuchung der eingefrorenen Kryoproben zu ermöglichen.

Problematisch an einer derartigen Kryokonservierung biologischer Zellen oder Zellkulturen ist die Gefahr einer Zellschädigung, die insbesondere bei schnellen Kühlprozessen auftreten kann und durch Kristallisationsprozesse verursacht wird.

Bei der Kryokonservierung ist deshalb eine Qualitätskontrolle erforderlich, um die Vitalität aufgetauter Zellen zu ermitteln und gegebenenfalls Zellschädigungen durch Rekristallisationsprozesse zu erkennen, damit eine aufgetaute Kryoprobe gegebenenfalls verworfen werden kann.

Es ist bekannt, Kryoproben im eingefrorenen Zustand mikroskopisch zu untersuchen, um Zellschädigungen zu erkennen, die durch Rekristallisationsprozesse verursacht wurden.

Es ist weiterhin bekannt, Kryoproben auf eine kalte Oberfläche aufzutropfen ("splat cooling"), anschließend bei der Rekristallisationstemperatur der Kryoprobe zu temperieren und schließlich mikroskopisch zu untersuchen.

Der Einfluss von Einfriervorgängen auf biologischen Zellen ist experimentell an verschiedenartigen Zellen, wie Hefezellen oder Spermien, mittels Kryomikroskopie oder DSC Messungen untersucht worden. (z.B. Medrano A. et al. "Importance of cooling rate and animal variability for boar sperm cryopreservation: Insights from the cryomicroscope" Reproduction (Cambridge), Bd. 123, Nr. 2, Februar 2002, Seiten 315 - 322; Knox J.M. et al. "Volumetric changes in cells during freezing and thawing" Journal of Biochmechanical engineering, Bd. 102, Mai 1980, Seiten 91 - 97; und Ramachandra V. Devireddy et al. "Measurement of water transport during freezing in cell suspensions using a differential scanning calorimeter" Cryobiology, 1998, Bd. 36, Seiten 124-155, Artikel Nr. CY972071). Dabei sind Proben mit einem definierten Temperaturprofil, beziehungsweise mit definierten Kühlraten abgekühlt und eingefroren worden.

Bei den vorstehend beschriebenen bekannten Untersuchungsverfahren für Kryoproben ist jedoch keine Echtzeit-Untersuchung der Kryoproben möglich.

Der Erfindung liegt deshalb die Aufgabe zugrunde, die vorstehend beschriebenen bekannten Untersuchungsverfahren dahingehend zu verbessern, dass eine Echtzeit-Untersuchung von Kryoproben möglich ist.

Diese Aufgabe wird durch ein Untersuchungsverfahren gemäß Anspruch 1 und durch eine entsprechende Untersuchungsanordnung gemäß Anspruch 8 gelöst.

Die Erfindung umfasst die allgemeine technische Lehre, die Kryoproben während des Einfrierens zu untersuchen, um eine Zellschädigung bereits während des Einfrierens in Echtzeit zu erkennen.

Das Einfrieren der Kryoprobe erfolgt durch das bereits eingangs erwähnte "Splat Cooling". Hierbei wird die Kryoprobe auf einen Probenträger getropft, wobei der Probenträger eine Temperatur aufweist, die unter der Schmelztemperatur der Kryoprobe und/oder unter der Rekristallisationstemperatur der Kryoprobe liegt. Beim Auftreffen auf den Probenträger gefriert die abgetropfte Kryoprobe dann auf dem kalten Probenträger. Die Kryoprobe wird hierbei also vorzugsweise beim Auftreffen auf den Probenträger untersucht. Es besteht auch die Möglichkeit, dass die Kryoprobe untersucht wird, nachdem die Kryoprobe auf den Probenträger aufgetroffen ist und bevor die Kryoprobe vollständig eingefroren ist, obwohl die Erfindung hinsichtlich der Untersuchung der Kryoprobe nicht auf diesen Zeitraum beschränkt ist. Darüber hinaus kann die Kryoprobe hierbei direkt am Auftreffpunkt auf dem Probenträger untersucht werden.

Vorzugsweise erfolgt die Untersuchung der Kryoproben optisch, wobei die Kryoprobe vorzugsweise auf Rekristallisationsprozesse hin untersucht wird.

Das erfindungsgemäße Prinzip einer Echtzeit-Untersuchung der Kryoproben während des Einfrierens ist jedoch nicht auf die Untersuchung auf Rekristallisationsphänomene hin beschränkt, sondern auch in Verbindung mit anderen Untersuchungsarten realisierbar.

Bei der optischen Untersuchung der Kryoproben kann beispielsweise eine Transmissionsmessung und/oder eine Reflexionsmessung und/oder eine Streulichtmessung erfolgen. Hierbei wird die Erkenntnis ausgenutzt, dass Kristallisationsprozesse in der Kryoprobe die optischen Eigenschaften der Kryoprobe verändern, was beispielsweise durch eine Intensitätsmessung des transmittierten, reflektierten bzw. gestreuten Lichts ermittelt werden kann.

Die Erfindung ist jedoch im Rahmen der optischen Untersuchung nicht auf eine Intensitätsmessung beschränkt. Vielmehr können auch andere optische Eigenschaften des von der Kryoprobe transmittierten, reflektierten oder gestreuten Lichts ausgewertet werden, wie beispielsweise das Frequenzspektrum.

In dem erfindungsgemäßen Verfahren wird die Kryoprobe im aufgetauten Zustand auf einen Probenträger abgetropft und auf dem Probenträger abgekühlt, wobei die Kryoprobe untersucht wird. Vorzugsweise handelt es sich bei dem Probenträger um eine gekühlte Platte, so dass die Kryoprobe nach dem Auftreffen auf den Probenträger innerhalb weniger Millisekunden festfriert und ihre Form anschließend nicht mehr verändert. Dies ist vorteilhaft, da eine Formänderung der Kryoprobe auf dem Probenträge beispielsweise aufgrund eines Zerfließens der Kryoprobe ebenfalls die optischen Eigenschaften der Kryoprobe verändern könnte, so dass die optische Untersuchung der Kryoprobe verfälscht würde.

Vorzugsweise weist der Probenträger bei diesem Ausführungsbeispiel im Bereich des Auftreffpunktes eine ebene und nicht geneigte Oberfläche auf, um ein Wegfließen der Kryoprobe zu vermeiden.

In einem anderen Ausführungsbeispiel der Erfindung ist oberhalb des Probenträgers eine transparente Abdeckung angeordnet, die vorzugsweise plattenförmig ist und mit dem Probenträger einen Aufnahmeraum einschließt, in den sich die Kryoprobe während der Untersuchung befindet. Die Kryoprobe wird hierbei also in den Aufnahmeraum zwischen der transparenten Abdeckung und dem Probenträger eingebracht und anschließend untersucht, wobei sich insbesondere optische Untersuchungsverfahren eignen. Der Einschluss der Kryoprobe zwischen der transparenten Abdeckung und dem Probenträger verhindert vorteilhafterweise, dass eine Bewegung der Kryoprobe beispielsweise aufgrund eines seitlichen Zerfließens die optischen Eigenschaften der Kryoprobe verfällt.

In diesem Ausführungsbeispiel der Erfindung ist der Probenträger vorzugsweise leicht in Richtung des Aufnahmeraums bzw. der transparenten Abdeckung geneigt, damit die Kryoprobe nach dem Auftreffen auf den Probenträger aufgrund der Schwerkraft selbständig in den Aufnahmeraum zwischen dem Probenträger und transparenten Abdeckung fließt. Beispielsweise kann der Probenträger einen Neigungswinkel im Bereich zwischen 2° und 15° aufweisen, jedoch ist die Erfindung nicht auf diese Neigungswinkel des Probenträgers beschränkt.

In einem weiteren Ausführungsbeispiel der Erfindung wird die Kryoprobe zur Untersuchung während des Einfrierens in einen Probenbehälter eingebracht, wobei der Probenbehälter beispielsweise eine Küvette sein kann. Die Küvette ist hierbei über eine Temperiereinrichtung temperierbar, um die Kryoprobe einzufrieren oder aufzutauen. Weiterhin ist hierbei zu erwähnen, dass der Probenbehälter vorzugsweise eine mindestens teilweise transparente Behälterwandung aufweist, um eine optische Untersuchung der in dem Probenbehälter befindlichen Kryoprobe zu ermöglichen.

Andere vorteilhafte Weiterbildungen der Erfindung sind in Unteransprüchen gekennzeichnet oder werden nachstehend zusammen mit der Beschreibung der bevorzugten Ausführungsbeispiele der Erfindung anhand der Figuren näher erläutert.

Es zeigen:
- Figur 1: eine schematische Darstellung einer erfindungsgemäßen Untersuchungsanordnung für Kryoproben,
- Figur 2: ein alternatives Ausführungsbeispiel einer derartigen Untersuchungsanordnung sowie
- Figur 3: ein weiteres Ausführungsbeispiel einer Untersuchungsanordnung für Kryoproben.

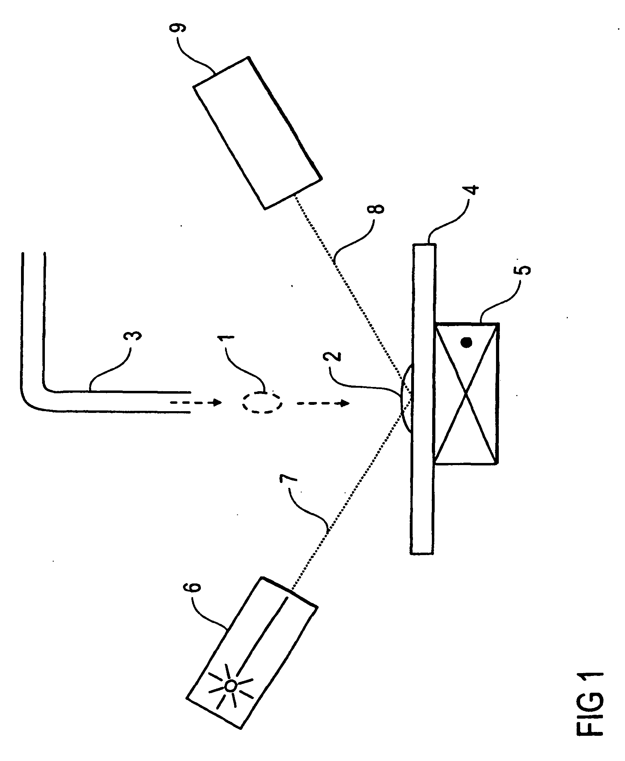

Die in Figur 1 schematisch dargestellte erfindungsgemäße Untersuchungsanordnung weist zur Zuführung von Kryoproben 1, 2 eine Zuleitung 3 auf, wobei es sich beispielsweise um eine Kanüle handeln kann. Die Erfindung ist jedoch hinsichtlich der Zuleitung 3 nicht auf eine Kanüle beschränkt, sondern auch mit anderen Schläuchen oder Leitungen realisierbar, die eine manuelle oder automatisierte Zuführung der Kryoproben 1, 2 ermöglichen.

Unterhalb der Mündungsöffnung der Zuleitung 3 befindet sich ein Probenträger 4, auf den die Kryoprobe 1 auftropft, wobei die Kryoprobe 2 den aufgetropften Zustand darstellt, in dem sich die Kryoprobe 2 etwas über die Oberfläche des Probenträgers 4 verteilt.

Der Probenträger 4 ist weiterhin mit einem Peltier-Element 5 verbunden, das eine Abkühlung oder Aufheizung des Probenträgers 4 und damit auch der auf dem Probenträger 4 befindlichen Kryoprobe 2 ermöglicht. Der Probenträger 4 wird deshalb vor dem Auftropfen der Kryoprobe 1 bzw. 2 von dem Peltier-Element 5 bis unter die Rekristallisationstemperatur der Kryoproben 1,2 abgekühlt, so dass die Kryoprobe 2 im aufgetropften Zustand innerhalb weniger Millisekunden erstarrt und anschließend auch innerlich einfriert.

Während dieses Einfrierens der Kryoprobe 2 wird diese in Echtzeit untersucht, um Rekristallisationsprozesse innerhalb der Kryoprobe 2 erkennen zu können.

Hierzu weist die erfindungsgemäße Untersuchungsanordnung einen Laser 6 auf, der einen Laserstrahl 7 auf die Kryoprobe 2 richtet, wobei ein von der Kryoprobe 2 reflektierter Laserstrahl 8 von einem Photodetektor 9 erfasst wird. Durch eine Auswertung der Intensität des reflektierten Laserstrahls 8 können dann Rekristallisationsprozesse in der Kryoprobe 2 erkannt werden, die sich beispielsweise in einem Peak äußern.

Auf diese Weise ist es möglich, bereits beim Einfrieren der Kryoprobe 2 zellschädigende Rekristallisationsprozesse in der Kryoprobe 2 zu erkennen. Darüber hinaus ermöglicht diese Untersuchungsanordnung auch eine Echtzeit-Erkennung von zellschädigenden Rekristallisationsprozessen während des Auftauens der Kryoprobe 2, wenn das Peltier-Element 5 den Probenträger 4 und damit auch die Kryoprobe 2 wieder auftaut.

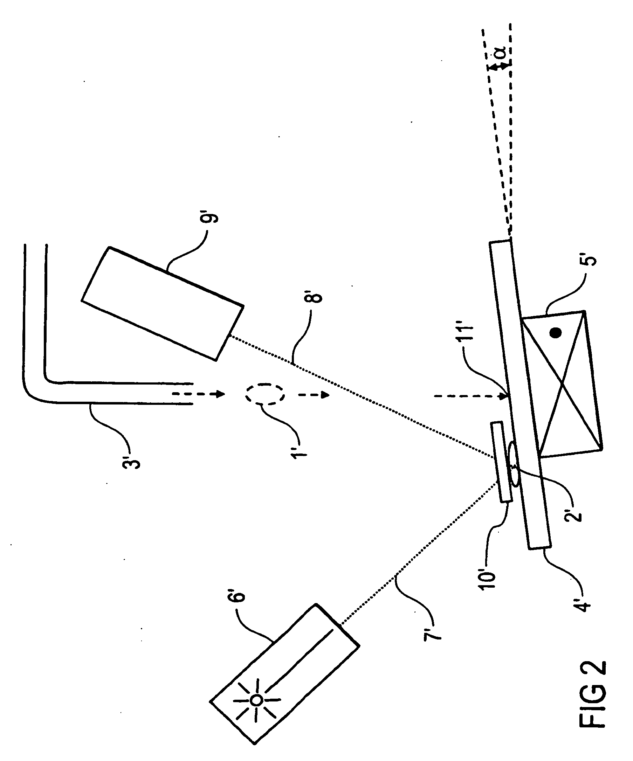

Das in Figur 2 dargestellte alternative Ausführungsbeispiel einer erfindungsgemäßen Untersuchungsanordnung stimmt weitgehend mit dem vorstehend beschriebenen und in Figur 1 dargestellten Ausführungsbeispiel überein, so dass zur Vermeidung von Wiederholungen weitgehend auf die vorstehende Beschreibung zu Figur 1 verwiesen wird, wobei für entsprechende Bauteile dieselben Bezugszeichen verwendet werden, die lediglich zur Unterscheidung durch einen Apostroph gekennzeichnet sind.

Eine Besonderheit dieses Ausführungsbeispiels besteht darin, dass der plattenförmige Probenträger 4' an seiner Oberseite eine transparente Abdeckung 10' aufweist, die ebenfalls plattenförmig ist und parallel zu dem Probenträger 4' verläuft. Die transparente Abdeckung 10' schließt mit dem Probenträger 4' einen Aufnahmeraum ein, in dem sich während der optischen Untersuchung durch den Laser 6' und den Photodetektor 9' die Kryoprobe 2' befindet.

Weiterhin ist der gesamte Probenträger 4' gegenüber der horizontalen um einen Neigungswinkel α in Richtung auf die Abdeckung 10' geneigt, wobei der Neigungswinkel α beispielsweise im Bereich zwischen 2° und 15° liegen kann. Die Neigung des Probenträgers 4' gegenüber der Horizontalen dient zur Einführung der Kryoprobe 2' in den Aufnahmeraum zwischen der Abdeckung 10' und dem Probenträger 4', wie im Folgenden beschrieben wird.

So verlässt die Kryoprobe 1' die Zuleitung 3' und fällt aufgrund der Schwerkraft nach unten in Richtung auf einen Auftreffpunkt 11' auf dem Probenträger 4'. Nach dem Auftreffen auf dem Auftreffpunkt 11' des Probenträgers 4' zerfließt die Kryoprobe 2' zunächst, wobei die Kryoprobe 2' in den Aufnahmeraum zwischen der Abdeckung 10' und dem Probenträger 4' gerät. Dort gefriert die Kryoprobe 2' dann und wird von dem Laser 6' und dem Photodetektor 9' untersucht, um Rekristallisationsprozesse erkennen zu können.

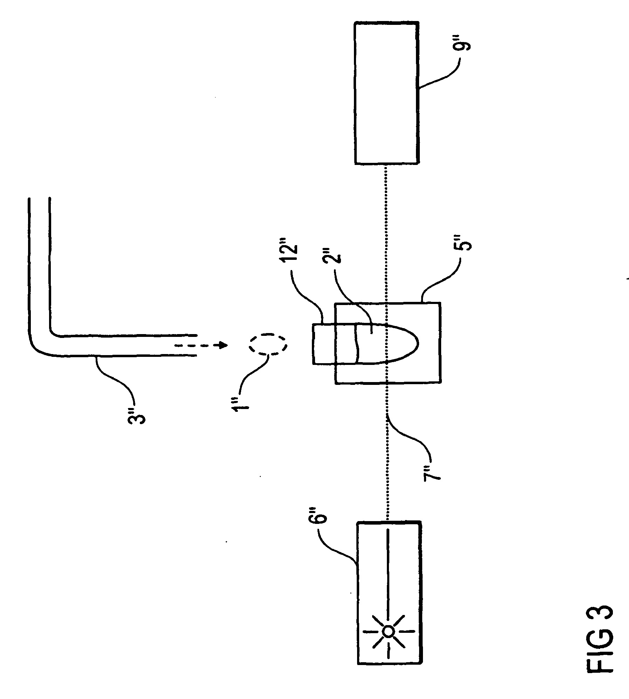

Das in Figur 3 dargestellte alternative Ausführungsbeispiel einer erfindungsgemäßen Untersuchungsanordnung stimmt ebenfalls weitgehend mit dem vorstehend beschriebenen und in Figur 1 gezeigten Ausführungsbeispiel überein, so dass im Folgenden zur Vermeidung von Wiederholungen weitgehend auf die vorstehende Beschreibung zu Figur 1 verwiesen wird und für entsprechende Bauteile dieselben Bezugszeichen verwendet werden, die zur Unterscheidung lediglich durch zwei Apostrophe gekennzeichnet sind.

Eine Besonderheit dieses Ausführungsbeispiels besteht darin, daß die Kryoprobe 2" während der Untersuchung durch den Laser 6" und den Photodetektor 9" von einem Probenbehälter 12" in Form einer Küvette aufgenommen wird, wobei der Probenbehalter 12" durch ein Peltier-Element 5" temperierbar ist.

Das Peltierelement 5" und der Probenbehälter 12" weisen hierbei eine mindestens teilweise transparente Wandung auf, um eine Durchleuchtung durch den Laser 6" zu ermöglichen.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

## Patentansprüche

1. Untersuchungsverfahren für mindestens eine biologische Kryoprobe (1, 1', 1", 2, 2', 2"), insbesondere zur Qualitätskontrolle bei der Kryokonservierung, mit den folgenden Schritten:
- Abtropfen der Kryoprobe (1, 1', 1", 2, 2', 2") auf einen Probenträger (4, 4'),
- Abkühlung und Einfrieren der abgetropften Kryoprobe (1, 1', 1", 2, 2', 2") auf dem Probenträger (4, 4'),
- Untersuchung der abgetropften Kryoprobe (1, 1', 1", 2, 2', 2") auf dem Probenträger (4, 4') während des Einfrierens,
**dadurch gekennzeichnet, dass**
der Probenträger (4, 4') vor dem Abtropfen der Kryoprobe (1, 1', 1", 2, 2', 2") bis unter die Schmelztemperatur und/oder bis unter die Rekristallisationstemperatur der Kryoprobe (1, 1', 1", 2, 2', 2") abgekühlt wird.

2. Untersuchungsverfahren nach Anspruch 1, **dadurch gekennzeichnet, dass** die Kryoprobe (1, 1', 1", 2, 2', 2") optisch untersucht wird.

3. Untersuchungsverfahren nach Anspruch 1 oder 2, **dadurch gekennzeichnet, dass** die Kryoprobe (1, 1', 1", 2, 2', 2") auf Kristallisationen hin untersucht wird.

4. Untersuchungsverfahren nach einem der vorhergehenden Ansprüche, **dadurch gekennzeichnet, dass** die optische Untersüchung der Kryoprobe (1, 1', 1", 2, 2', 2") eine Transmissionsmessung und/oder Reflexionsmessung und/oder eine Streulichtmessung umfasst.

5. Untersuchungsverfahren nach einem der vorhergehenden Ansprüche, **dadurch gekennzeichnet, dass** über dem Probenträger (4, 4') eine transparente Abdeckung angeordnet ist, wobei die Kryoprobe (1, 1', 2, 2') in den Zwischenraum zwischen der Abdeckung und dem Probenträger (4, 4') eingebracht wird.

6. Untersuchungsverfahren nach einem der vorhergehenden Ansprüche, **gekennzeichnet durch** folgende Schritte:
- Einführung der Kryoprobe (1", 2") in einen Probenbehälter (12"),
- Abkühlung der Kryoprobe (1", 2") in dem Probenbehälter (12"),
- Untersuchung der Kryoprobe (1", 2") in dem Probenbehälter (12").

7. Untersuchungsanordnung für mindestens eine Kryoprobe (1, 1', 1", 2, 2', 2"), insbesondere zur Qualitätskontrolle bei der Kryokonservierung, mit
- einer Temperiereinrichtung (5, 5', 5") zum Einfrieren der Kryoprobe (1, 1', 1", 2, 2', 2"),
- einem von der Temperiereinrichtung (5, 5') temperierbaren Probenträger (4, 4') zur Aufnahme der Kryoprobe (1, 1', 1", 2, 2', 2") während der Untersuchung,
- einer Untersuchungseinrichtung (6, 6', 6", 9, 9', 9") zur Untersuchung der Kryoprobe (1, 1', 1", 2, 2', 2") während des Einfrierens,
**gekennzeichnet durch**
- eine Abtropfvorrichtung (3, 3') zum Abtropfen der Kryoprobe (1, 1', 1", 2, 2', 2") auf einen Auftreffpunkt auf dem Probenträger (4, 4').

8. Untersuchungsanordnung nach Anspruch 7, **dadurch gekennzeichnet, dass** die Untersuchungseinrichtung (6, 6', 6", 9, 9', 9") zur Durch- oder Beleuchtung der Kryoprobe (1, 1', 1", 2, 2', 2") eine Lichtquelle (6, 6', 6") aufweist.

9. Untersuchungsanordnung nach Anspruch 8, **dadurch gekennzeichnet, dass** die Untersuchungseinrichtung (6, 6', 6", 9, 9', 9") zur Erfassung des von der Kryoprobe (1, 1', 1", 2, 2', 2") reflektierten, gestreuten und/oder transmittierten Lichts einen Photodetektor (9, 9', 9") aufweist.

10. Untersuchungsanordnung nach einem der Ansprüche 7 bis 9, **dadurch gekennzeichnet, dass** der Probenträger (4, 4') an dem Auftreffpunkt der Kryoprobe (1, 1', 1", 2, 2', 2") eine im wesentlichen ebene Oberfläche aufweist.

11. Untersuchungsanordnung nach einem der Ansprüche 7 bis 9, **gekennzeichnet durch** eine transparente Abdeckung (10') für den Probenträger (4'), die seitlich neben dem Auftreffpunkt (11') auf dem Probenträger (4, 4') angeordnet ist und zwischen dem Probenträger (4, 4') und der Abdeckung (10') einen Aufnahmeraum für die abgetropfte Kryoprobe (2') bildet.

12. Untersuchungsanordnung nach Anspruch 11, **dadurch gekennzeichnet, dass** der Probenträger (4, 4') an dem Auftreffpunkt (11') eine Oberfläche aufweist, die in Richtung auf den Aufnahmeraum geneigt ist.

13. Untersuchungsanordnung nach einem der Ansprüche 7 bis 12, **dadurch gekennzeichnet, dass** zur Aufnahme der Kryoprobe (1", 2") während der Untersuchung ein Probenbehälter (12") vorgesehen ist, wobei der Probenbehälter (12") mindestens teilweise eine transparente Behälterwandung aufweist, um eine optische Untersuchung der in dem Probenbehälter (12") befindlichen Kryoprobe (1 ", 2") zu ermöglichen.

## Claims

1. Method for analyzing of at least one biological cryo sample (1, 1', 1", 2, 2', 2"), particularly for quality control during cryopreservation, comprising the following steps:
- Dripping the cryo sample (1, 1', 1", 2, 2', 2") onto a sample carrier (4, 4'),
- Cooling and freezing the dripped cryo sample (1, 1', 1", 2, 2', 2") on the sample carrier (4, 4'),
- Analysis of the dripped cryo sample (1, 1', 1", 2, 2', 2") on the sample carrier (4, 4') during freezing,
**characterized in that**
the sample carrier (4, 4') is cooled down under the melting temperature and/or under the recrystallization temperature of the cryo sample (1, 1', 1", 2, 2', 2") before dripping the cryo sample (1, 1', 1", 2, 2', 2").

2. Method for analyzing according to claim 1, **characterized in that** the cryo sample (1, 1', 1", 2, 2', 2") is optically analyzed.

3. Method for analyzing according to claims 1 or 2, **characterized in that** the cryo sample (1, 1', 1", 2, 2', 2") is analyzed with regard to crystallizations.

4. Method for analyzing according to one of the preceding claims, **characterized in that** the optical analysis of the cryo sample (1, 1', 1", 2, 2', 2") comprises a transmission measurement and/or a reflection measurement and/or a stray light measurement.

5. Method for analyzing according to one of the preceding claims, **characterized in that** a transparent cover is arranged above the sample carrier (4, 4'), wherein the cryo sample (1, 1', 2, 2') is introduced into the interspace between the cover and the sample carrier (4,4').

6. Method for analyzing according to one of the preceding claims, **characterized by** the following steps:
- Introducing the cryo sample (1", 2") into a sample container (12"),
- Cooling the cryo sample (1", 2") within the sample container (12"),
- Analysis of the cryo sample (1", 2") within the sample container (12").

7. Arrangement for analysis of at least one cryo sample (1, 1', 1", 2, 2', 2"), particularly for quality control during cryo preservation, comprising
- a temperature adjustment device (5, 5', 5") for freezing the cryo sample (1, 1', 1", 2, 2', 2"),
- a sample carrier (4, 4') which can be temperature-adjusted by the temperature adjustment device (5, 5') for receiving the cryo sample (1, 1', 1", 2, 2', 2") during the analysis,
- an analysis apparatus (6, 6', 6", 9, 9', 9") for analyzing the cryo sample (1, 1', 1", 2, 2', 2") during freezing,
**characterized by**
- a dripping device (3, 3') for dripping the cryo sample (1, 1', 1", 2, 2', 2") onto a point of impact onto the sample carrier (4, 4').

8. Analysis arrangement according to claim 7, **characterized in that** the analysis arrangement (6, 6', 6", 9, 9', 9") comprises a light source (6, 6', 6") for transillumination or illumination of the cryo sample (1, 1', 1", 2, 2', 2").

9. Analysis arrangement according to claim 8, **characterized in that** the analysis arrangement (6, 6', 6", 9, 9', 9") comprises a photodetector (9, 9', 9") for detecting the light reflected, straight and/or transmitted by the cryo sample (1, 1', 1", 2, 2', 2").

10. Analysis arrangement according to one of claims 7 to 9, **characterized in that** the sample carrier (4, 4') comprises a substantially flat surface at the point of impact of the cryo sample (1, 1', 1", 2, 2', 2").

11. Analysis arrangement according to one of claims 7 to 9, **characterized by** a transparent cover (10') for the sample carrier (4'), which is arranged laterally besides the point of impact (11') on the sample carrier (4, 4') and which forms a receiving space for the dripped cryo sample (2') between the sample carrier (4, 4') and the cover (10').

12. Analysis arrangement according to claim 11, **characterized in that** the sample carrier (4, 4') comprises a surface at the point of impact, which is inclined towards the receiving space.

13. Analysis arrangement according to one of claims 7 to 12, **characterized in that** a sample container (12") is provided for receiving the cryo sample (11", 2") during analysis, wherein the sample container (12") comprises an at least partially transparent container wall for enabling an optical analysis of the cryo sample (1", 2") within the sample container (12").

## Revendications

1. Procédé d'examen d'au moins un échantillon cryogénique biologique (1, 1', 1", 2, 2', 2"), en particulier pour le contrôle de qualité lors de la cryoconservation, comprenant les étapes suivantes :
- égouttage de l'échantillon cryogénique (1, 1', 1", 2, 2', 2") sur un support d'échantillon (4, 4'),
- refroidissement et congélation de l'échantillon cryogénique (1, 1', 1", 2, 2', 2") égoutté sur le support d'échantillon (4, 4'),
- examen de l'échantillon cryogénique (1, 1', 1", 2, 2', 2") égoutté sur le support d'échantillon (4, 4') pendant la congélation,
**caractérisé en ce que**
le support d'échantillon (4, 4') est refroidi avant égouttage de l'échantillon cryogénique (1, 1', 1", 2, 2', 2"), jusqu'à une température inférieure à la température de fusion et/ou jusqu'à une température inférieure à la température de recristallisation de l'échantillon cryogénique (1, 1', 1", 2, 2' 2").

2. Procédé d'examen selon la revendication 1, **caractérisé en ce que** l'échantillon cryogénique (1, 1', 1", 2, 2', 2") est examiné optiquement.

3. Procédé d'examen selon la revendication 1 ou 2, **caractérisé en ce que** les cristallisations de l'échantillon cryogénique (1, 1', 1", 2, 2', 2") sont examinées.

4. Procédé d'examen selon l'une des revendications précédentes, **caractérisé en ce que** l'examen optique de l'échantillon cryogénique (1, 1', 1", 2, 2', 2") comprend une mesure de transmission et/ou une mesure de réflexion et/ou une mesure de lumière diffusée.

5. Procédé d'examen selon l'une des revendications précédentes, **caractérisé en ce qu'**un couvercle transparent est disposé au-dessus du support d'échantillon (4, 4'), l'échantillon cryogénique (1, 1', 2, 2') étant mis en place dans l'interstice entre le couvercle et le support d'échantillon (4, 4').

6. Procédé d'examen selon l'une des revendications précédentes, **caractérisé par** les étapes suivantes :
- introduction de l'échantillon cryogénique (1", 2") dans un récipient pour échantillon (12"),
- refroidissement de l'échantillon cryogénique (1", 2") dans le récipient pour échantillon (12"),
- examen de l'échantillon cryogénique (1", 2") dans le récipient pour échantillon (12").

7. Installation d'examen d'au moins un échantillon cryogénique (1, 1', 1", 2, 2', 2"), en particulier pour le contrôle de qualité lors de la cryoconservation, avec
- un dispositif de thermostatisation (5, 5', 5") pour la congélation et/ou la décongélation de l'échantillon cryogénique (1, 1', 1", 2, 2', 2"), et
- un support d'échantillon (4, 4') à température équilibrable par le dispositif de thermostatisation (5, 5'), pour la réception de l'échantillon cryogénique (1, 1', 1", 2, 2', 2") pendant l'examen,
- un dispositif d'examen (6, 6', 6", 9, 9', 9") pour l'examen de l'échantillon cryogénique (1, 1', 1", 2, 2', 2") pendant la congélation,
**caractérisée par**
- un dispositif d'égouttage (3, 3') pour l'égouttage de l'échantillon cryogénique (1, 1', 1", 2, 2', 2") vers un point d'incidence sur le support d'échantillon (4, 4').

8. Installation d'examen selon la revendication 7, **caractérisée en ce que** le dispositif d'examen (6, 6', 6", 9, 9', 9") comporte une source lumineuse (6, 6', 6") pour la transillumination ou l'éclairage de l'échantillon cryogénique (1, 1', 1", 2, 2', 2").

9. Installation d'examen selon la revendication 8, **caractérisée en ce que** le dispositif d'examen (6, 6', 6", 9, 9', 9") comporte un photodétecteur (9, 9', 9") pour la détection de la lumière réfléchie, diffusée et/ou transmise par l'échantillon cryogénique (1, 1', 1", 2, 2', 2").

10. Installation d'examen selon l'une des revendications 7 à 9, **caractérisée en ce que** le support d'échantillon (4, 4') présente une surface sensiblement plane sur le point d'incidence de l'échantillon cryogénique (1, 1', 1" 2, 2', 2").

11. Installation d'examen selon l'une des revendications 7 à 9, **caractérisée par** un couvercle (10') transparent pour le support d'échantillon (4'), lequel est disposé à côté du point d'incidence (11') sur le support d'échantillon (4, 4') et forme un espace de réception pour l'échantillon cryogénique (2') égoutté entre le support d'échantillon (4, 4') et le couvercle (10').

12. Installation d'examen selon la revendication 11, **caractérisée en ce que** le support d'échantillon (4, 4') présente sur le point d'incidence (11') une surface inclinée vers l'espace de réception.

13. Installation d'examen selon l'une des revendications 7 à 12, **caractérisée en ce qu'**un récipient pour échantillon (12") est prévu pour la réception de l'échantillon cryogénique (1", 2") pendant l'examen, ledit récipient pour échantillon (12") présentant au moins partiellement une paroi de récipient transparente pour permettre un examen optique de l'échantillon cryogénique (1", 2") qui se trouve dans le récipient pour échantillon (12").
